# EUROPEAN PATENT SPECIFICATION

(11) **EP 3 356 495 B1**
(45) Date of publication and mention of the grant of the patent: **20.01.2021**
(21) Application number: 16781312.0
(22) Date of filing: 30.09.2016
(51) Int. Cl.: C10B 1/04, C10B 49/02, C10B 53/02, F23B 90/06

(54) **APPARATUS AND CORRESPONDING METHOD TO PRODUCE BIOMASS CHARCOAL**
VORRICHTUNG UND ENTSPRECHENDES VERFAHREN ZUR HERSTELLUNG VON BIOMASSEHOLZKOHLE
APPAREIL ET PROCÉDÉ CORRESPONDANT DE PRODUCTION DE CHARBON DE BOIS DE BIOMASSE

(30) Priority: 30.09.2015 IT UB20154040
(43) Date of publication of application: 08.08.2018
(73) Proprietor: Blucomb S.r.l., 33100 Udine (IT)
(72) Inventor: CAREGNATO, Davide, 31010 Mareno Di Piave (IT); DELLA TOFFOLA, Daniele, 33042 Buttrio (IT); FERRATO DI SBROJAVACCA, Carlo, 33083 Chions (IT); PERESSOTTI, Alessandro, 33100 Udine (IT)
(74) Representative: Petraz, Davide Luigi
(86) International application number: PCT/EP2016/073502
(87) International publication number: WO 2017/055601

(56) References cited:
- DE-C- 693 982
- FR-A- 987 473
- FR-E- 34 667
- US-A- 1 680 613

## Description

### FIELD OF THE INVENTION

The present invention concerns an apparatus and method to produce and gasify or preserve biomass charcoal, that is, an apparatus and method suitable to produce the desired carbonization of a biomass according to the principle of micro-gasification and to thermally enhance the charcoal produced, by gasifying it, or to stabilize it by cooling it.

The invention can also be used as an apparatus for heat generation, for example, for heating domestic or public spaces, for cooking food or other.

Furthermore, the apparatus can be used as a part of heaters, boilers, fireplaces or other.

### BACKGROUND OF THE INVENTION

The reaction of pyrolysis is known, which generates combustible gas and biomass charcoal, which is a carbon-rich solid residue, as a consequence of the heat transformation of a solid biomass.

Micro-gasification apparatuses are known, in which the steps of drying and generating gas from the biomass take place in a controlled manner inside a reactor, that is, in a zone that separates spatially and temporally the combustion step of the gas generated, which takes place in a burner.

In detail, the control of the stream of primary air is intended, that is, the supply of oxygen inside the reactor to improve performance and speed of gasification, to improve the combustion performance, reduce the emission of gases and particulate and improve convective heat exchanges.

Furthermore, it is known that in the reactor the control of the primary air allows to interrupt the gasification process of the biomass charcoal to be preserved or burnt during a third step, separated spatially and temporally from the preceding two.

The Italian patent application N° UD2011A000168 is an example of an application of the micro-gasification process to obtain a pyrolytic heater with reduced emission of smoke, carbon monoxide (CO) and other noxious gases.

The prior art document provides an external container on which for example an element to be heated can be put.

A biomass container through which primary air passes is present in the external container, which has holes to introduce the air in its base.

At a certain height, the biomass container has holes for the entrance of secondary air. The biomass is ignited in the upper part and thanks to the micro-gasification process produces gas that combines with the secondary air, generating a flame.

The need to concentrate the combustible gas generated by the biomass and to mix it with secondary air for optimum combustion determines a substantially cylindrical shape of the apparatus.

Therefore, these apparatuses cannot be made with shapes other than cylindrical.

Furthermore, for the same reason, in the solution described in the above patent application, the flame has a very vertically elongated shape and hence does not allow a good heat transfer onto the surfaces to be heated.

Another disadvantage of apparatuses, known from the prior art document, is that they do not allow to preserve the biomass charcoal from the secondary gasification processes, and do not prevent the biomass charcoal from transforming into ash and dispersing great quantities of CO; nor do they guarantee optimum gasification of the biomass charcoal. For this reason, at the end of the main process, it is necessary to extract the biomass charcoal produced by the burner at a suitable time and to cool it, or to transfer it to another container.

All these operations require the intervention of an operator at the right moment and can be inconvenient or even dangerous, given the presence of embers and high temperatures.

Other known carbonization apparatuses are described for example in documents US 1 680 613 A and FR 34 667 E.

However, these apparatuses do not allow an efficient production of biomass charcoal and it is difficult to use them even for possible different applications.

One purpose of the present invention is to obtain an apparatus that allows to maximize the exploitation of the heat produced by processes for the production of biomass charcoal and possibly the gasification thereof, at the same time extending the range of applications, which can therefore also be used as a heat generation apparatus.

Another purpose of the present invention is to obtain an apparatus that selectively allows to prevent the biomass charcoal produced from being transformed into ash, or to guarantee an optimum gasification phase of the biomass charcoal itself.

Another purpose of the present invention is to obtain a more efficient energy conversion, and at the same time to be able to extend the type of biomasses that can be used.

Another purpose of the present invention is to obtain a small apparatus for the production of biomass charcoal that is easy to transport, reducing its bulk, and which at the same time can easily obtain and contain the biomass charcoal produced cleanly, practically and safely.

Another purpose is to obtain an apparatus that can be associated with already existing products, heaters, cooking devices or other, in which it is necessary to convert the combustion process.

Another purpose is to obtain an apparatus able to reduce significantly the emissions of carbon monoxide and non-combusted gases.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, an apparatus for the production of biomass charcoal comprises an external casing configured to house a biomass inside it.

Even if in the following description we will consider the preferential form cylindrical, the invention allows longitudinal shapes whose section, orthogonal to the axis, can be square, rectangular, hexagonal, oval, semi-circular or other section, advantageous for the application.

According to one aspect of the present invention, the external casing is associated internally with at least a tubular body, advantageously located coaxial to it, open in correspondence to its lower end.

The association of the external casing and the tubular body generates, in the example case of cylindrical bodies, at least an interspace for the passage of the primary air that will have the desired section shape, for example a toric ring.

Alternatively, if the bodies have a parallelepiped shape for example, interspaces of other shapes could be made for the passage of the primary air, even for example separate chambers.

According to the invention, the biomass is located above a support plane housed in the interspace for the passage of primary air.

On the other hand a flow of secondary air is conveyed inside a pipe made in the tubular element or body.

The toric ring, which is made inside the external casing, can cooperate with holes disposed in correspondence with its lower end, as present in the tubular body, which holes serve to introduce primary air that expands in the biomass present in the toric ring.

The tubular body can be configured to coaxially house inside it a sliding body which can have at least two operating conditions: one open and one closed.

The sliding body is provided with exit means disposed in correspondence with an upper end to allow the exit of secondary air from the tubular body.

The primary air and the secondary air can depend on a natural circulation, or a forced circulation according to desired designs and modalities.

Exiting from the exit means, the secondary air mixes with the combustible gas produced inside the toric ring.

Operatively, since the tubular body is partly surrounded by the biomass, the secondary air is heated before mixing with the combustible gas, thus improving combustion.

In a closed condition of the sliding body, the secondary air that continues to transit in the tubular body becomes cooling air that cools the biomass charcoal contained in the toric ring.

According to one aspect of the present invention the sliding body is provided, advantageously but not exclusively, in correspondence with its upper end, with a plate.

The plate, in cooperation with the exit means, allows to obtain a stable flame, diffused and controlled and of desired size and characteristics to render efficient the use of the heat thus created.

Advantageously, the apparatus thus made allows to obtain a process of micro-gasification with separate phases, in which the gasified biomass is thus progressively transformed into biomass charcoal, with the release of combustible gas, inside the toric ring.

The invention also provides to regulate the position of the sliding body with respect to the tubular body to advantageously improve the flow of combustible gas.

The invention also provides that, when the biomass has been completely converted into biomass charcoal, the sliding body is positioned so that the primary air can no longer enter the toric ring, and the combustible gas, instead of exiting, saturates the toric ring in order to prevent the gasification of the biomass charcoal and its transformation into ash.

The present invention also provides a method for the production of biomass charcoal by means of controlled combustion of the biomass housed inside the external casing.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a perspective view of a possible embodiment of the apparatus for the production of biomass charcoal;
- fig 2 is a longitudinal section of the apparatus in fig. 1;
- fig. 3 is a detailed view of the upper part of the apparatus in fig. 1 in an open configuration;
- fig. 4 is a detailed view of the lower part of the device in fig. 1 in an open configuration;
- fig. 5 is a detailed view of the upper part of the device in fig. 1 in a closed configuration;
- fig. 6 is a detailed view of the lower part of the device in fig. 1 in a closed configuration;
- fig. 7 is a detailed view of a section of the upper part of the device in fig. 1 in an open configuration;
- fig. 8 is a detailed view of a section of the lower part of the device in fig. 1 in an open configuration;
- fig. 9 is section of the upper part of the device in fig. 1 in a closed configuration;
- fig. 10 is section of the lower part of the device in fig. 1 in a closed configuration;
- fig. 11 is section of the upper part of the device in fig. 1 in an open configuration;
- fig. 12 is section of the lower part of the device in fig. 1 in an open configuration;
- fig. 13 is section of the upper part of the device in fig. 1 in a closed configuration;
- fig. 14 is section of the lower part of the device in fig. 1 in a closed configuration;
- fig. 15 is a schematic representation of the functioning of the device in an open configuration;
- fig. 16 is a schematic representation of the functioning of the device in a closed configuration;
- fig. 17 is a perspective view of a second possible embodiment of the device in an open configuration;
- fig. 18 is a perspective view of the device in fig. 17 in a closed configuration;
- fig. 19 is a longitudinal section of the device in fig. 17 in an open configuration;
- fig. 20 is a three dimensional view in longitudinal section of an executive variant of the present apparatus;
- fig. 21 is a schematic representation of the functioning of the apparatus in fig. 20.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

The drawings are used to describe embodiments of an apparatus 10 for the production of biomass charcoal and is able to provide a process of micro-gasification in separate phases.

The apparatus can be used alone or inserted in a container belonging to a heater for example, or a boiler or other.

The apparatus 10 comprises an external casing 12, made for example of metal material or similar material resistant to high temperatures.

The external casing 12 can be cylindrical for example, or oval or cylindrical-toroidal, or semi-circular or prismatic or truncated cone shaped or similar, and has an axis S.

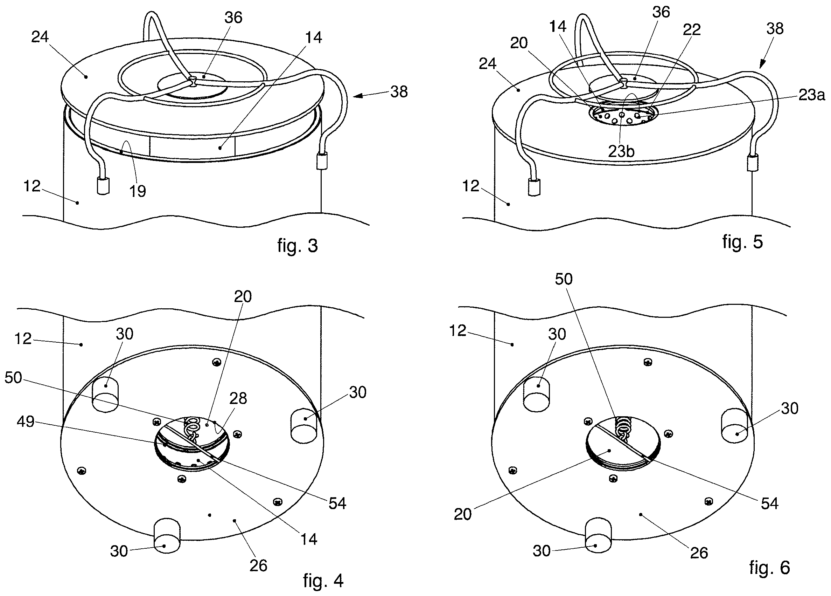

With reference to figs. 4 and 6, the external casing 12 is configured to be partly closed at the bottom by a base 26, except for the presence of the hole 28, and is open on the top in correspondence with an aperture 19.

The external casing 12 is associated with at least a tubular body 14 located coaxial with respect to the axis S of the external casing 12 which is free at the bottom.

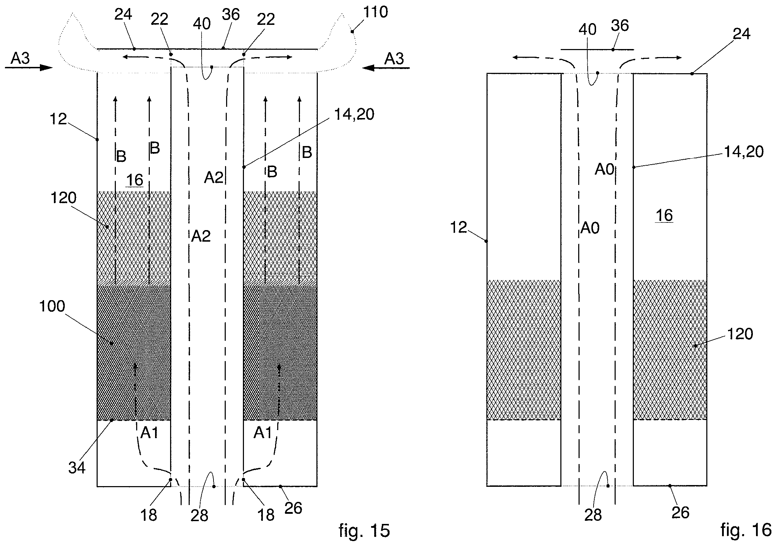

The association of the external casing 12 and the tubular body 14 generates an interspace 16 or 16' which is configured to accommodate inside it a biomass 100 (fig. 15).

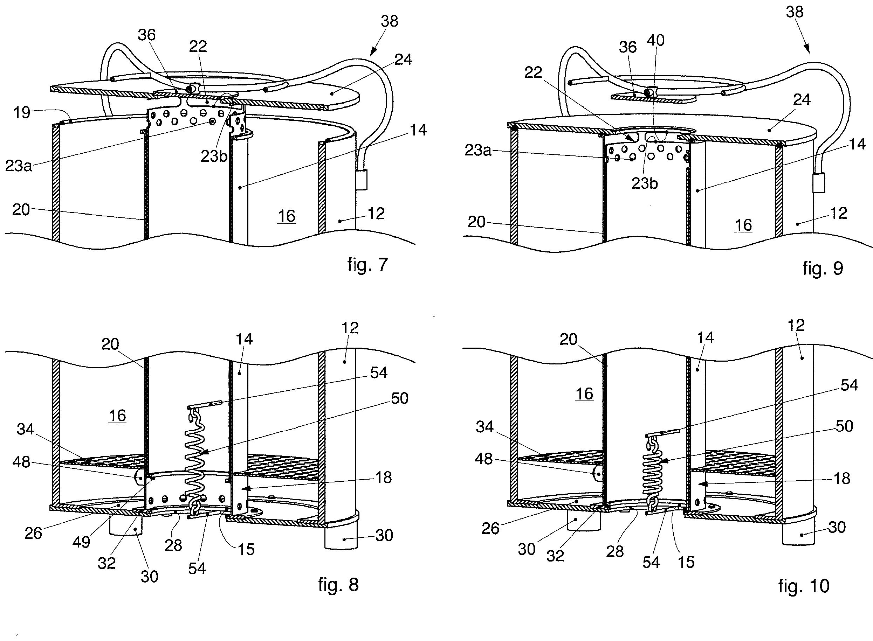

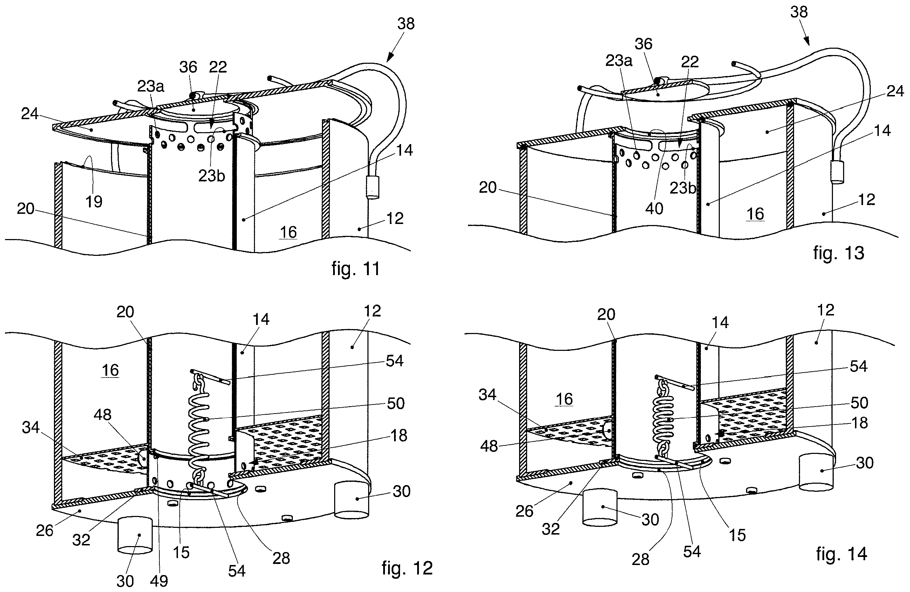

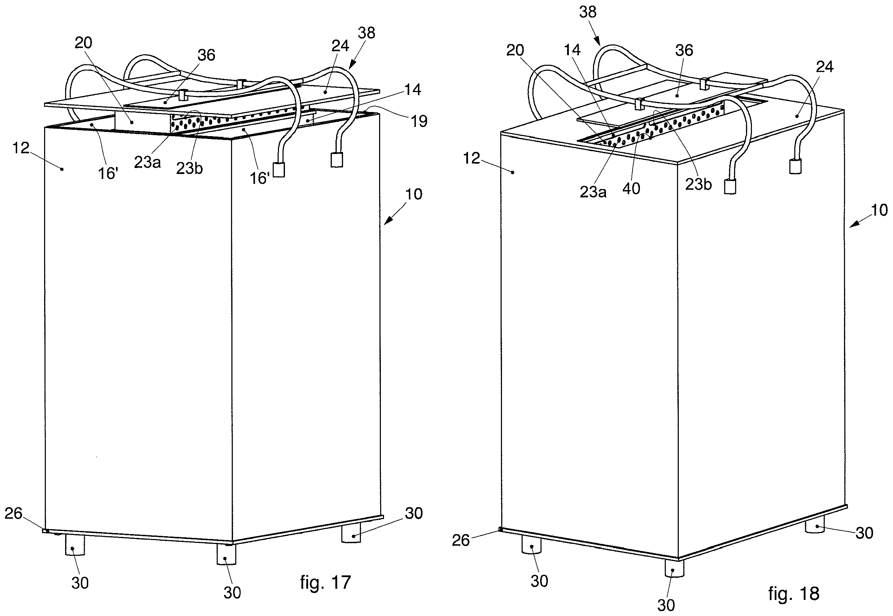

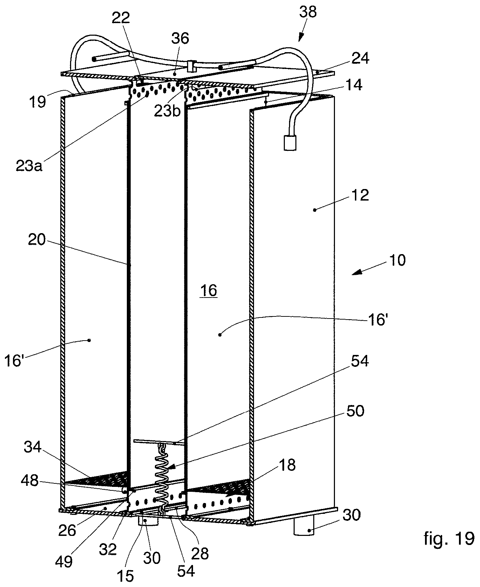

The interspace 16 or 16' can be annular, and thus form a toric ring 16 (see figs. 8-14 for example), or can have a different shape and comprise separate chambers 16' (see fig. 17 or fig. 19).

The tubular body 14 is open in correspondence with the top, while in correspondence with its lower end it is open and has at least one hole 15, whereas in relation to the toric ring 16 it has holes 18 which serve to send primary air A1 into the toric ring 16.

The hole 15 made in the tubular body 14 is positioned at the base of a pipe 55 made in the tubular body 14.

The hole 15 can be associated, by way of example, both with natural circulation and also with means that send air in an expressly desired quantity. The functioning of the means that send air can also vary during the functioning cycle.

The hole 28 advantageously corresponds to the hole 15 of the tubular body 14.

The base 26 can be associated with the tubular body 14 in any way whatsoever. In the drawings it is associated by way of example by means of a support bracket 32 attached solidly to the base 26 by mechanical attachment.

The toric ring 16 has inside it, at a certain height with respect to the bottom, a support plane 34 associated with the base 26 and able to support the biomass 100 introduced inside the toric ring 16, the support plane 34 being installed above the holes 18.

For example, the support plane 34 is a grid to allow the primary air A1 to pass and thus to feed the biomass 100.

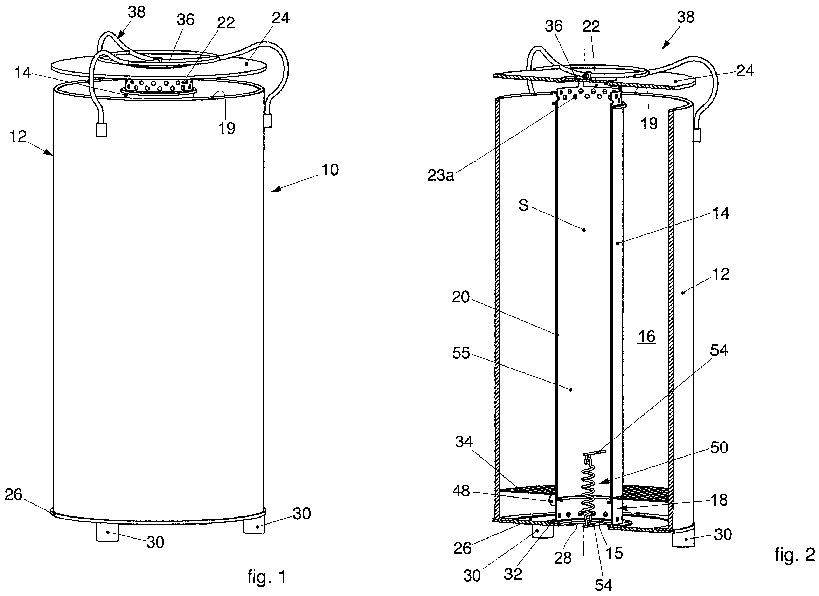

In one embodiment shown in fig. 2, the grid or support plane 34 can be a mesh of metal material, or material suitable to resist high temperatures, the weave of which has links of sizes suitable to prevent the biomass 100 from falling.

In another embodiment, not shown, the support plane 34 can be a metal plate provided with through holes of suitable smaller sizes.

The stream of air that enters from the hole 15 and does not pass through the holes 18, or secondary air A2, flows inside the pipe 55 of the tubular body 14 to mix with a combustible gas B (fig. 15), which is the product of the pyrolysis process of the biomass 100.

Furthermore, depending on the phase of the cycle, the tubular body 14 uses the secondary air A2 as cooling air A0 (fig. 16).

The tubular body 14 is configured to house inside it a sliding body 20 which is coaxial to the tubular body 14 and is configured to be complementary to it.

The sliding body 20 selectively slides inside the tubular body 14 along an axis S and is provided with exit means 22 disposed in correspondence with its upper end.

The exit means 22 allow the secondary air A2 to exit from the tubular body 14 and to combine with the combustible gas B produced in the toric ring 16.

The exit means 22 comprise at least a plurality of first apertures 23a, through which the secondary air A2 is able to exit from the tubular body 14, and which are disposed on parallel and offset rows to allow a desired distribution of the secondary air A2.

In one embodiment shown in detail in fig. 7, the exit means 22 also comprise second apertures 23b, with an elongated circumferential shape, to supply secondary air A2 in a laminar fashion.

In the embodiment shown in fig. 2, the external casing 12 and the tubular body 14 are configured with a cylindrical shape and therefore the toric ring 16 is circular, but it can also have other shapes depending on the geometric shapes of the external casing 12 and/or the tubular body 14.

The sliding body 20 is associated in correspondence with its upper end with a plate 24, which has a size sufficient to at least partly close above the toric ring 16.

The plate 24 is attached to the sliding body 20 so as to serve at least two positions of the sliding body 20, so that in the closed position it at least partly closes the upper aperture 19 of the toric ring 16.

In particular, the open position of the sliding body 20 defines the opening of the holes 18 and the exit means 22, in order to allow the primary air A1 to enter and the secondary air A2 to exit.

The closed position of the sliding body 20 causes the holes 18 and the exit means 22 to close, preventing the passage of the primary air A1 and the secondary air A2.

An intermediate position of the sliding body 20 causes the holes 18 to open and the exit means 22 to partly open, in order to reduce the secondary air A2 introduced and to promote the transformation of the red-hot biomass charcoal into combustible gas B and guarantee a better combustion thereof.

Sealing means are provided, to stop the passage of air.

In particular, the plate 24 determines the open and closed condition of the toric ring 16 to continue or control the combustion process.

The plate 24 has a through hole 40 that cooperates with the sliding body 20.

In a variant embodiment, not shown, the plate 24 can have several through holes 40.

In an embodiment shown in figs. 2, 7, 9, the apparatus 10 comprises a stopper mean 36 that has a fixed position with respect to the external casing 12, being positioned in this way by support and positioning means 38.

When the sliding body 20 is open, the stopper mean 36 closes the through hole 40, while when it is in the closed position it disassociates from the through hole 40, leaving it open.

In one embodiment, shown in detail in the drawings, the apparatus 10 can comprise a temperature sensor element 48, for example a thermostatic sensor.

The sensor 48 is configured to detect the temperature of the biomass 100, or, the sensor 48 can also detect other physical parameters connected to the system and/or connected method.

The sensor element 48 is configured to control the position of a drive device 50, which in this case is an elastic element, suitable to determine the closed position of the sliding body 20.

The sensor element 48 also controls and manages a temporary holding mean 49, which determines an interference of the sliding body 20, holding it in the open position (figs. 4, 8, 12, 19) when active.

The drive device 50 is connected to elements 54 which are installed on the sliding body 20.

In one embodiment shown in the drawings, the base 26 can be provided with support elements 30 to keep the apparatus 10 raised with respect to any support surface.

In one embodiment shown in figs. 17-19, which can be combined with the embodiments described above, the external casing 12, the tubular body 14 and the sliding body 20 are configured by way of example as a parallelepiped, but they can also have other sections.

The present invention also concerns a method to produce biomass charcoal 120 using the apparatus 10.

The method according to the present invention provides:
- to put the biomass 100 above the support plane 34 and between the external casing 12 and the tubular body 14;
- to ignite from above the biomass 100 fed by the primary air A1 arriving from the holes 18 present in the tubular body 14 below the support plane 34;
- to heat the secondary air A2 inside the tubular body 14 which subsequently exits from the exit means 22, combining with combustible gas B generated by the biomass 100, producing a flame 110 associated with the plate 24.

In an embodiment shown in fig. 15, the flame 110 can be affected by a further contribution of tertiary air A3, natural or forced, coming from the outside and flowing in counter-flow with respect to the combustible gas B and to the secondary air A2, in order to improve the turbulence in the flame 110 and improve the mixing of the combustible gas B and the secondary air A2.

When the sliding body 20 is in the open position, the apparatus 10 is at least partly extracted from the tubular body 14, causing the holes 18, the exit means 22 and the toric ring 16 or the separate chambers 16' to open.

The plate 24 matches with the stopper mean 36, forming a substantially continuous surface.

The drive device 50 is in a condition of elastic elongation. However, the sliding of the sliding body 20 toward the base 26 is prevented by the interference exerted by the temporary holding mean 49 in its extracted condition.

When the sliding body 20 is in the closed position, the apparatus 10 is completely retracted inside the tubular body 14, causing the holes 18, the exit means 22 and the toric ring 16 to close; in this case, the plate 24 closes the aperture 19, causing the toric ring 16 to close.

The drive device 50 is in a condition of elastic rest, since it has caused the sliding of the sliding body 20 toward the base 26, once the temporary holding mean 49 is in its retracted condition.

The tubular body 14 is the only one that has its lower end and its top both completely open.

Fig. 15 shows schematically the path followed by the air and combustible gas B in the open position of the sliding body 20.

The toric ring 16 is filled with biomass 100 to a certain load level.

The free air enters through the aperture present in the base of the tubular body 14.

In correspondence with the holes 18 the primary air A1 enters into the toric ring 16 to begin the combustion of the biomass 100, igniting the upper part.

During the pyrolysis phase igniting the upper part thereof, the biomass 100 frees combustible gas B and progressively transforms into residual biomass charcoal 120.

The combustible gas B thus produced rises through the toric ring 16 toward the plate 24.

A second combustion takes place in correspondence with the exit means 22, caused by the combustion of the combustible gas B and the secondary air A2.

In this way, a stable flame 110 is created, controlled and diffused, with suitable size and characteristics.

Moreover, the flame 110 is improved by the possible supply in counter-flow of tertiary air A3 arriving from outside the apparatus 10.

Advantageously, the cooperation of the second apertures 23b with the plate 24 create a kind of air cushion between the flame 110 and the plate 24, with the function of preventing the formation of zones of flame in direct contact with the plate 24, thus preventing any worsening of the quality of the combustion and an increase in the production of non-combusted gases.

Furthermore, the secondary air A2 passing through the tubular body 14 is heated, thus improving its mixing with the combustible gas B and obtaining a more efficient combustion. In this way, the supply of primary air A1 is also self-regulated.

The particular shape of the apparatus 10 autonomously regulates the streams of primary air A1, secondary air A2 and combustible gas B without needing to install forced ventilation devices and corresponding auxiliary electronic components.

Fig. 16 shows schematically the path followed by cooling air A0 in the closed position of the sliding body 20.

The biomass 100, now transformed into biomass charcoal 120, is no longer fed with primary air A1, but the combustion process is interrupted, preventing the transformation of the biomass charcoal 120 into ash.

Now a stream of cooling air A0 enters into the tubular body 14, passes through it and exits from the through hole 40.

The cooling air A0 removes heat from the toric ring 16 and consequently from the biomass charcoal 120, so that it can be removed at a later time in safety.

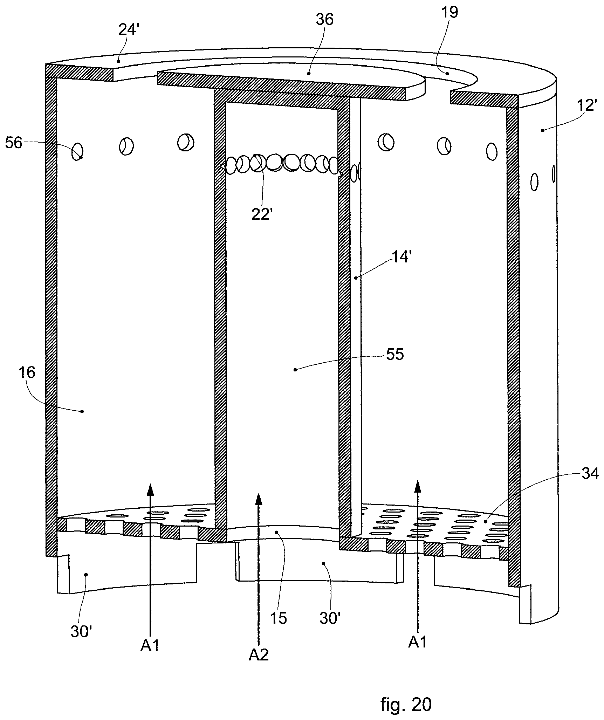

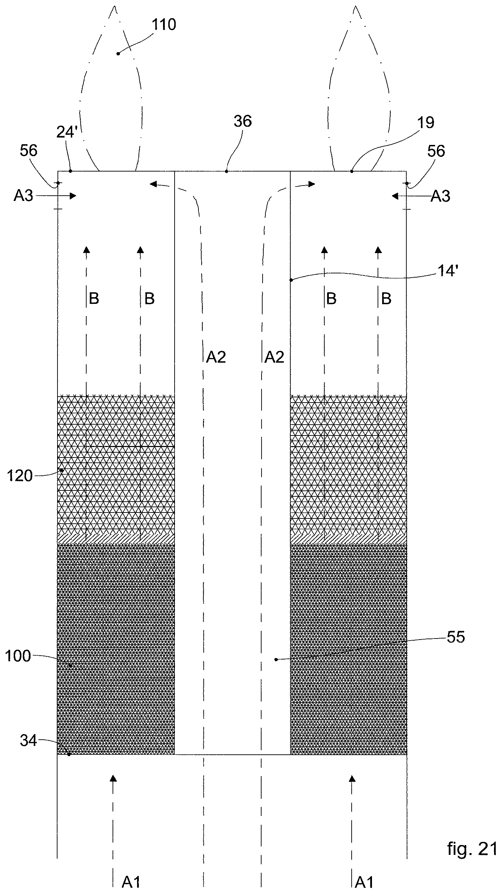

In the variant of the apparatus shown in figs. 20 and 21, the plate 24' is directly attached to the external casing 12'. The tubular body 14' is made in a single piece and comprises the stopper 36 at its upper part.

The plate 24' and the stopper 36 form the toroidal-shaped aperture 19, or other shape. The flame 110 can suitably develop through the aperture 19.

The means to introduce secondary air A2 inside the toric ring 16 can in this case be formed by holes 22' located above the tubular body 14'; the secondary air A2 therefore passes from the pipe 55 of the tubular body 14' to said holes 22' and then arrives in the upper part of the toric ring 16.

The tertiary air A3 on the contrary is conveyed inside the toric ring 16 through the holes 56.

The holes 56 are disposed for example on the upper part of the external casing 12'.

The variant shown in figs. 20 and 21 is advantageously useful when there is no interest in conserving the vegetable charcoal, but instead it is desired to burn the residual charcoal as well, totally exploiting the energy of the biomass for heating applications or suchlike.

The flame 110 that can be obtained with this last variant of the apparatus according to the invention is also optimally diffused and subjected to carburation, as in the other executive forms of apparatus described before.

It is clear that modifications and/or additions of parts may be made to the apparatus 10 as described heretofore, without departing from the field and scope of the present invention.

It is also clear that, although the present invention has been described with reference to some specific examples, a person of skill in the art shall certainly be able to achieve many other equivalent forms of apparatus 10, having the characteristics as set forth in the claims and hence all coming within the field of protection defined thereby.

## Claims

1. Apparatus to produce biomass charcoal (120) by combustion of a biomass (100), wherein said apparatus can be inserted in a container whose section orthogonal to an axis (S) is subject to the specific application, **characterized in that** said apparatus comprises an external casing (12, 12') open on the top in correspondence with an aperture (19) and associated internally with at least a tubular body (14, 14') located coaxial, an interspace (16, 16') for the passage of primary air (A1) being present between the external casing (12) and at least one tubular body (14), at least a support plane (34) being housed in said interspace (16, 16') to support the biomass (100) thereabove, said support plane (34) being a grid or a metal plate provided with through holes, able to allow a flow of primary air (A1) to feed the biomass (100) coming from below said support plane (34) and passing through said support plane (34), said tubular body (14, 14') having a pipe (55) for the passage and heating of secondary air (A2) provided with a hole (15) in correspondence with its lower end and having exit means (22, 22') of the secondary air (A2) disposed in correspondence with an upper end provided with a plate (24, 24'), said exit means (22, 22') being provided for combining said secondary air (A2) with combustible gas (B) generated by the biomass (100) in said interspace (16, 16') in order to produce a flame (110), associated with said plate (24, 24'), that develops through said aperture (19).

2. Apparatus as in claim 1, **characterized in that** said tubular element (14) comprises peripheral holes (18) on its base and communicating with said interspace (16, 16').

3. Apparatus as in claim 1 or 2, **characterized in that** said tubular body (14) is configured to coaxially house inside it a sliding body (20), said sliding body (20) having at least two axial positions.

4. Apparatus as in claim 3, **characterized in that** said sliding body (20) is selectively slidable along said axis (S) inside said tubular body (14) and in proximity to the internal wall of said tubular body (14).

5. Apparatus as in claim 3 or 4, **characterized in that** said sliding body (20) is associated in correspondence with the upper end to said plate (24) and cooperates with said tubular body (14), the whole being governed by at least two positions of the sliding body (20), in a first position with the holes (18) and the exit means (22) open and a closed position in which it at least partly closes said holes (18) and said exit means (22) as well as the interspace (16, 16') at the upper part, in correspondence with an aperture (19).

6. Apparatus as in any claim hereinbefore, **characterized in that** said exit means (22) comprise at least a plurality of first apertures (23a).

7. Apparatus as in any claim hereinbefore, **characterized in that** said exit means (22) comprise second apertures (23b) with an elongated circumferential shape, cooperating with said plate (24).

8. Apparatus as in any claim hereinbefore, **characterized in that,** said support plane (34) is a grid located coordinated with a base (26) of the external casing (12).

9. Apparatus as in any claim hereinbefore, **characterized in that,** in cooperation with said sliding body (20), said plate (24) has a through hole (40), in cooperation with said tubular body (14) and is associated with stopper means (36) that have at least two positions, one to close said through hole (40) and one to open said through hole (40) when the sliding body (20) is in the closed position.

10. Apparatus as in any claim hereinbefore, **characterized in that** it comprises a sensor element (48) selectively associated with temporal holding means (49) that hold the sliding body (20) in the open position.

11. Apparatus as in any claim hereinbefore, **characterized in that** it comprises a drive device (50) associated with the sliding body (20) able to determine at least the closed position of said sliding body (20).

12. Method to produce biomass charcoal (120) by combustion of a biomass (100), **characterized in that** said method provides:
- in at least one interspace (16, 16') present between an external casing (12, 12') and at least a tubular body (14, 14'), the biomass (100) is located above a support plane (34) in a desired quantity;
- said biomass (100) is ignited from above, being fed by primary air (A1) coming from below said support plane (34);
- secondary air (A2) is heated inside the tubular body (14, 14') and exits from exit means (22, 22') of the tubular body (14, 14'), disposed in correspondence with an upper end provided with a plate (24, 24'), said secondary air (A2) thereby combining with combustible gas (B) generated by the biomass (100) in said interspace (16, 16') and producing a flame (110) associated with said plate (24, 24').

13. Method as in claim 12, **characterized in that** the flame (110) is conditioned by the presence of said plate (24) cooperating with said exit means (22).

14. Method as in claim 12 or 13, **characterized in that** said flame (110) can be affected by another supply of tertiary air (A3) coming from the outside and in counter-flow with respect to said combustible gas (B) and to said secondary air (A2).

15. Method as in any of the claims from 12 to 14, **characterized in that** when the biomass (100) has been entirely converted into biomass charcoal (120) and reaches the desired temperature, a temperature sensor (48) is activated that conditions the constraint to which a sliding body (20) is subjected, which sliding body (20) has exit means (22) and is associated with the plate (24), removing said constraint so that said sliding body (20) in the closed position closes both the holes (18) and the exit from the external casing (12) through the plate (24) so as to condition the combustion of the biomass (100) present in the interspace (16, 16').

16. Method as in any of the claims from 12 to 15, **characterized in that** when the sliding body (20) is in the closed position and the plate (24) closes the interspace (16, 16'), a through hole (40) present in the plate (24) in axial cooperation with the sliding body (20) opens to allow the passage of cooling air (A0).

## Patentansprüche

1. Vorrichtung zur Herstellung von Biomassenholzkohle (120) durch Verbrennen einer Biomasse (100), wobei die Vorrichtung in einen Behälter eingesetzt werden kann, dessen Querschnitt orthogonal zu einer Achse (S) von der spezifischen Anwendung abhängig ist, **dadurch gekennzeichnet, dass** die Vorrichtung ein Außengehäuse (12, 12') umfasst, das in Übereinstimmung mit einer Öffnung (19) oben offen ist und im Inneren mit mindestens einem koaxial angeordneten röhrenförmigen Körper (14, 14') verbunden ist, wobei ein Zwischenraum (16, 16') für den Durchstrom von primärer Luft (A1) zwischen dem Außengehäuse (12) und mindestens einem röhrenförmigen Körper (14) vorliegt, wobei mindestens eine Trägerebene (34) in dem Zwischenraum (16, 16') untergebracht ist, auf der die Biomasse (100) getragen wird, wobei die Trägerebene (34) ein Gitter oder eine mit Durchgangslöchern versehene Metallplatte ist, das/die den Durchstrom von primärer Luft (A1), die von unterhalb der Trägerebene (34) kommend durch die Trägerebene (34) hindurchströmt, zur Zufuhr der Biomasse (100) ermöglicht, wobei der röhrenförmige Körper (14, 14') ein Leitungsrohr (55) für den Durchstrom und das Erwärmen von sekundärer Luft (A2) aufweist, das mit einer Öffnung (15) in Übereinstimmung mit seinem unteren Ende versehen ist, und Austrittsmittel (22, 22') für die sekundäre Luft (A2), die in Übereinstimmung mit einem mit einer Platte (24, 24') versehenen oberen Ende angeordnet sind, aufweist, wobei die Austrittsmittel (22, 22') zum Vereinigen der sekundären Luft (A2) mit verbrennbarem Gas (B), das von der Biomasse (100) in dem Zwischenraum (16, 16') erzeugt wird, ausgelegt sind, um eine mit der Platte (24, 24') verbundene Flamme (110) zu erzeugen, die sich durch die Öffnung (19) entwickelt.

2. Vorrichtung gemäß Anspruch 1, **dadurch gekennzeichnet, dass** das röhrenförmige Element (14) an seiner Basis periphere Löcher (18) umfasst und so mit dem Zwischenraum (16, 16') in Verbindung steht.

3. Vorrichtung gemäß Anspruch 1 oder 2, **dadurch gekennzeichnet, dass** der röhrenförmige Körper (14) so konfiguriert ist, dass er in seinem Inneren koaxial einen Gleitkörper (20) beherbergt, wobei der Gleitkörper (20) mindestens zwei axiale Positionen aufweist.

4. Vorrichtung gemäß Anspruch 3, **dadurch gekennzeichnet, dass** der Gleitkörper (20) entlang der Achse (S) innerhalb des röhrenförmigen Körpers (14) und nahe der Innenwand des röhrenförmigen Körpers (14) selektiv gleiten kann.

5. Vorrichtung gemäß Anspruch 3 oder 4, **dadurch gekennzeichnet, dass** der Gleitkörper (20) in Übereinstimmung mit dem oberen Ende mit der Platte (24) verbunden ist und mit dem röhrenförmigen Körper (14) kooperiert, wobei das Ganze durch mindestens zwei Positionen des Gleitkörpers (20) reguliert wird, einer ersten Position, in der die Löcher (18) und die Austrittsmittel (22) offen sind, und einer geschlossenen Position, in der er zumindest teilweise die Löcher (18) und die Austrittsmittel (22) sowie den Zwischenraum (16, 16') am oberen Teil, in Übereinstimmung mit einer Öffnung (19), verschließt.

6. Vorrichtung gemäß irgendeinem vorhergehenden Anspruch, **dadurch gekennzeichnet, dass** die Austrittsmittel (22) zumindest eine Vielzahl an ersten Öffnungen (23a) umfassen.

7. Vorrichtung gemäß irgendeinem vorhergehenden Anspruch, **dadurch gekennzeichnet, dass** die Austrittsmittel (22) zweite Öffnungen (23b) mit verlängerter Umfangsform umfassen, die mit der Platte (24) kooperieren.

8. Vorrichtung gemäß irgendeinem vorhergehenden Anspruch, **dadurch gekennzeichnet, dass** die Trägerebene (34) ein Gitter ist, das in Koordination mit einer Basis (26) des Außengehäuses (12) angeordnet ist.

9. Vorrichtung gemäß irgendeinem vorhergehenden Anspruch, **dadurch gekennzeichnet, dass**, in Kooperation mit dem Gleitkörper (20), die Platte (24) ein Durchgangsloch (40) aufweist, das mit dem röhrenförmigen Körper (14) kooperiert und mit Anschlagmitteln (36) verbunden ist, die mindestens zwei Positionen aufweisen, eine zum Verschließen des Durchgangslochs (40) und eine zum Öffnen des Durchgangslochs (40), wenn sich der Gleitkörper (20) in der geschlossenen Position befindet.

10. Vorrichtung gemäß irgendeinem vorhergehenden Anspruch, **dadurch gekennzeichnet, dass** sie ein Sensorelement (48) umfasst, das selektiv mit temporären Haltemitteln (49) verbunden ist, die den Gleitkörper (20) in der offenen Position halten.

11. Vorrichtung gemäß irgendeinem vorhergehenden Anspruch, **dadurch gekennzeichnet, dass** sie eine Antriebsvorrichtung (50) umfasst, die mit dem Gleitkörper (20) verbunden ist und in der Lage ist, zumindest die geschlossene Position des Gleitkörpers (20) zu bestimmen.

12. Verfahren zur Herstellung von Biomassenholzkohle (120) durch Verbrennen einer Biomasse (100), **dadurch gekennzeichnet, dass** das Verfahren bereitstellt:
- das Platzieren von Biomasse (100) in gewünschter Menge oberhalb einer Trägerebene (34) in mindestens einem Zwischenraum (16, 16'), der zwischen einem Außengehäuse (12, 12') und mindestens einem röhrenförmigen Körper (14, 14') vorliegt,
- das Entzünden der Biomasse (100) von oben, wobei sie mit von unterhalb der Trägerebene (34) kommender primärer Luft (A1) versorgt wird,
- das Erwärmen von sekundärer Luft (A2) innerhalb des röhrenförmigen Körpers (14, 14') und deren Austreten aus Austrittsmitteln (22, 22') des röhrenförmigen Körpers (14, 14'), wobei die Austrittsmittel (22, 22') in Übereinstimmung mit einem mit einer Platte (24, 24') versehenen oberen Ende angeordnet sind, wodurch die sekundäre Luft (A2) mit dem durch die Biomasse (100) in dem Zwischenraum (16, 16') erzeugten brennbaren Gas (B) vereinigt wird und eine mit der Platte (24, 24') verbundene Flamme (110) erzeugt wird.

13. Verfahren gemäß Anspruch 12, **dadurch gekennzeichnet, dass** die Flamme (110) durch die Gegenwart der mit den Austrittsmitteln (22) kooperierenden Platte (24) konditioniert wird.

14. Verfahren gemäß Anspruch 12 oder 13, **dadurch gekennzeichnet, dass** die Flamme (110) durch eine weitere Zufuhr tertiärer Luft (A3), die von außen kommt und im Gegenstrom zu dem brennbaren Gas (B) und zu der sekundären Luft (A2) strömt, beeinflusst werden kann.

15. Verfahren gemäß irgendeinem der Ansprüche 12 bis 14, **dadurch gekennzeichnet, dass**, wenn die Biomasse (100) vollständig in Biomassenholzkohle (120) überführt wurde und die gewünschte Temperatur erreicht hat, ein Temperatursensor (48) aktiviert wird, der die Beschränkung, dem ein Gleitkörper (20) unterworfen ist, konditioniert, wobei der Gleitkörper (20) Austrittsmittel (22) aufweist und mit der Platte (24) verbunden ist, wodurch die Beschränkung aufgehoben wird, so dass der Gleitkörper (20) in der geschlossenen Position sowohl die Löcher (18) als auch den Ausgang aus dem Außengehäuse (12) durch die Platte (24) verschließt, so dass die Verbrennung der in dem Zwischenraum (16, 16') vorliegenden Biomasse (100) konditioniert wird.

16. Verfahren gemäß irgendeinem der Ansprüche 12 bis 15, **dadurch gekennzeichnet, dass**, wenn sich der Gleitkörper (20) in der geschlossenen Position befindet und die Platte (24) den Zwischenraum (16, 16') verschließt, ein Durchgangsloch (40), das in der Platte (24) in axialer Kooperation mit dem Gleitkörper (20) vorliegt, geöffnet wird, um den Durchstrom von Kühlungsluft (A0) zu ermöglichen.

## Revendications

1. Appareil pour produire du charbon de biomasse (120) par combustion d'une biomasse (100), dans lequel ledit appareil peut être inséré dans un récipient dont la section orthogonale à un axe (S) est soumise à l'application spécifique, **caractérisé en ce que** ledit appareil comprend une enveloppe externe (12, 12') ouverte sur le dessus en correspondance avec une ouverture (19) et associée intérieurement à au moins un corps tubulaire (14, 14') situé coaxialement, un espace intermédiaire (16, 16') pour le passage de l'air primaire (A1) étant présent entre l'enveloppe extérieure (12) et au moins un corps tubulaire (14), au moins un plan de support (34) étant logé dans ledit espace intermédiaire (16, 16') pour supporter la biomasse (100) qui se trouve au-dessus, ledit plan de support (34) étant une grille ou une plaque métallique munie de trous traversants, capable de permettre un flux d'air primaire (A1) pour alimenter la biomasse (100) provenant du dessous dudit plan de support (34) et passant à travers ledit plan de support (34), ledit corps tubulaire (14, 14') ayant un tuyau (55) pour le passage et le chauffage de l'air secondaire (A2) pourvu d'un trou (15) en correspondance avec son extrémité inférieure et ayant des moyens de sortie (22, 22') de l'air secondaire (A2) disposé en correspondance avec une extrémité supérieure munie d'une plaque (24, 24'), lesdits moyens de sortie (22, 22') étant prévus pour combiner ledit air secondaire (A2) avec un gaz combustible (B) généré par la biomasse (100) dans ledit espace intermédiaire (16, 16') afin de produire une flamme (110), associée à ladite plaque (24, 24'), qui se développe à travers ladite ouverture (19).

2. Appareil selon la revendication 1, **caractérisé en ce que** ledit élément tubulaire (14) comprend des trous périphériques (18) sur sa base et communiquant avec ledit espace intermédiaire (16, 16').

3. Appareil selon la revendication 1 ou 2, **caractérisé en ce que** ledit corps tubulaire (14) est configuré pour loger coaxialement à l'intérieur de celui-ci un corps coulissant (20), ledit corps coulissant (20) ayant au moins deux positions axiales.

4. Appareil selon la revendication 3, **caractérisé en ce que** ledit corps coulissant (20) peut coulisser de manière sélective le long dudit axe (S) à l'intérieur dudit corps tubulaire (14) et à proximité de la paroi interne dudit corps tubulaire (14).

5. Appareil selon la revendication 3 ou 4, **caractérisé en ce que** ledit corps coulissant (20) est associé en correspondance avec l'extrémité supérieure à ladite plaque (24) et coopère avec ledit corps tubulaire (14), l'ensemble étant régi par au moins deux positions du corps coulissant (20), dans une première position avec les trous (18) et les moyens de sortie (22) ouverts et une position fermée dans laquelle il ferme au moins partiellement lesdits trous (18) et lesdits moyens de sortie (22) ainsi que l'espace intermédiaire (16, 16') à la partie supérieure, en correspondance avec une ouverture (19).

6. Appareil selon l'une quelconque des revendications ci-dessus, **caractérisé en ce que** lesdits moyens de sortie (22) comprennent au moins une pluralité de premières ouvertures (23a).

7. Appareil selon l'une quelconque des revendications ci-dessus, **caractérisé en ce que** lesdits moyens de sortie (22) comprennent des secondes ouvertures (23b) de forme circonférentielle allongée, coopérant avec ladite plaque (24).

8. Appareil selon l'une quelconque des revendications ci-dessus, **caractérisé en ce que,** ledit plan de support (34) est une grille située en coordination avec une base (26) du boîtier externe (12).

9. Appareil selon l'une quelconque des revendications ci-dessus, **caractérisé en ce que,** en coopération avec ledit corps coulissant (20), ladite plaque (24) comporte un trou traversant (40), en coopération avec ledit corps tubulaire (14) et est associée à des moyens d'arrêt (36) qui ont au moins deux positions, une pour fermer ledit trou traversant (40) et une pour ouvrir ledit trou traversant (40) lorsque le corps coulissant (20) est dans la position fermée.

10. Appareil selon l'une quelconque des revendications ci-dessus, **caractérisé en ce qu'il** comprend un élément capteur (48) associé sélectivement à des moyens de maintien temporel (49) qui maintiennent le corps coulissant (20) en position ouverte.

11. Appareil selon l'une quelconque des revendications -dessus, **caractérisé en ce qu'il** comprend un dispositif d'entraînement (50) associé au corps coulissant (20) capable de déterminer au moins la position fermée dudit corps coulissant (20).

12. Procédé de production de charbon de bois (120) par combustion d'une biomasse (100), **caractérisé en ce que** ledit procédé prévoit :
- dans au moins un espace intermédiaire (16, 16') présent entre une enveloppe extérieure (12, 12') et au moins un corps tubulaire (14, 14'), la biomasse (100) est située au-dessus d'un plan de support (34) en quantité souhaitée ;
- ladite biomasse (100) est enflammée par le haut, étant alimentée par de l'air primaire (A1) provenant du dessous dudit plan de support (34) ;
- l'air secondaire (A2) est chauffé à l'intérieur du corps tubulaire (14, 14') et sort par des moyens de sortie (22, 22') du corps tubulaire (14, 14'), disposés en correspondance avec une extrémité supérieure munie d'une plaque (24, 24'), ledit air secondaire (A2) se combinant ainsi avec le gaz combustible (B) généré par la biomasse (100) dans ledit espace intermédiaire (16, 16') et produisant une flamme (110) associée à ladite plaque (24, 24').

13. Procédé selon la revendication 12, **caractérisé en ce que** la flamme (110) est conditionnée par la présence de ladite plaque (24) coopérant avec lesdits moyens de sortie (22).

14. Procédé selon la revendication 12 ou 13, **caractérisé en ce que** ladite flamme (110) peut être affectée par une autre alimentation en air tertiaire (A3) provenant de l'extérieur et à contre-courant par rapport audit gaz combustible (B) et audit air secondaire (A2).

15. Procédé selon l'une quelconque des revendications de 12 à 14, **caractérisé en ce que** lorsque la biomasse (100) a été entièrement convertie en charbon de biomasse (120) et atteint la température souhaitée, un capteur de température (48) est activé qui conditionne la contrainte à laquelle est soumis un corps coulissant (20), lequel corps coulissant (20) comporte des moyens de sortie (22) et est associé à la plaque (24), supprimant ladite contrainte de sorte que ledit corps coulissant (20) en position fermée ferme à la fois les trous (18) et la sortie de l'enveloppe extérieure (12) à travers la plaque (24) de manière à conditionner la combustion de la biomasse (100) présente dans l'espace intermédiaire (16, 16').

16. Procédé selon l'une quelconque des revendications de 12 à 15, **caractérisé en ce que** lorsque le corps coulissant (20) est en position fermée et que la plaque (24) ferme l'espace intermédiaire (16, 16'), un trou traversant (40) présent dans la plaque (24) en coopération axiale avec le corps coulissant (20) s'ouvre pour permettre le passage de l'air de refroidissement (A0).
